# FASCICULE DE BREVET EUROPEEN

(11) **EP 1 292 746 B1**
(45) Date de publication et mention de la délivrance du brevet: **19.10.2005**
(21) Numéro de dépôt: 01947576.3
(22) Date de dépôt: 21.06.2001
(51) Int. Cl.: E04H 4/00, C04B 28/02, C04B 40/00

(54) **PROC D DE FABRICATION DE BASSINS AQUATIQUES ET BASSINS NOTAMMENT POUR PISCINE**
HERSTELLUNGSVERFAHREN EINES WASSERBECKENS, INSBESONDERE EINES SCHWIMMBECKENS
METHOD FOR MAKING AQUATIC POOLS AND IN PARTICULAR FOR SWIMMING POOLS

(30) Priorité: 22.06.2000 FR 0008198
(43) Date de publication de la demande: 19.03.2003
(73) Titulaire: Diffazur S.A., 06700 Saint Laurent du Var (FR)
(72) Inventeur: RICHARD, Monique, F-06000 Nice (FR); BENIELLI, Gérard, F-06000 Nice (FR); VICARIO, Antoine, F-06000 Nice (FR)
(74) Mandataire: Hautier, Jean-Louis
(86) Numéro de dépôt international: PCT/FR2001/001965
(87) Numéro de publication internationale: WO 2001/098606

(56) Documents cités:
- DD-A- 264 420
- LU-A- 39 089
- PATENT ABSTRACTS OF JAPAN vol. 2000, no. 01, 31 janvier 2000 (2000-01-31) & JP 11 270144 A (OHBAYASHI CORP;J FEC:KK), 5 octobre 1999 (1999-10-05)
- "CHEMICAL ABSTRACTS + INDEXES,US,AMERICAN CHEMICAL SOCIETY. COLUMBUS" CHEMICAL ABSTRACTS + INDEXES,US,AMERICAN CHEMICAL SOCIETY. COLUMBUS, XP000157955 ISSN: 0009-2258

## Description

La présente invention concerne un procédé de fabrication de bassins aquatiques consistant à couvrir les parois d'une cavité au moyen de béton.

Elle concerne également un bassin notamment pour piscine apte à être fabriqué en mettant en oeuvre ce procédé.

Dans le domaine de réalisation de piscines, on effectue généralement une cavité dans le sol apte à recevoir le volume d'eau nécessaire. Les parois de la cavité (parois latérales et fond) sont recouvertes de béton.

De façon habituelle, on pose au préalable une armature en acier autour de laquelle est coulé le béton. Un coffrage est en outre nécessaire pour effectuer une couverture d'épaisseur régulière.

Une telle technique de fabrication présente différents inconvénients.

En premier lieu, la coulée du béton représente une étape relativement longue nécessitant une main d'oeuvre importante.

Qui plus est, une armature en acier est nécessaire ce qui augmente le prix de revient de la fabrication.

Par ailleurs, l'armature d'acier n'a pas toujours une mise en forme aisée, ce qui est gênant pour réaliser des piscines dont le contour a une forme variée.

On a déjà pensé à renforcer le béton au moyen de fibres tel des fibres d'acier ou des fibres de polypropylène afin de supprimer le recours à une armature d'acier comme décrit dans le document DD 264420.

Cependant, il n'a pas été possible jusqu'à présent de parvenir à appliquer l'emploi d'un tel béton renforcé de fibres à la fabrication de piscines.

La présente invention permet de pallier les inconvénients des techniques de fabrication actuelles et surmonte le préjugé selon lequel l'emploi de béton fibré est impossible dans le domaine de la fabrication de piscine.

Pour parvenir à une telle fabrication, l'invention propose différentes étapes de réalisation.

Avantageusement, une projection du béton fibré est effectuée sur les parois à couvrir avec un débit élevé.

En effet, on a constaté que la mise en oeuvre d'un débit élevé permettait de maintenir la cohésion des fibres et du béton et donc d'obtenir un taux final de fibre dans le béton durci aussi élevé que possible.

On constate que l'emploi de débit peu élevé (de l'ordre de 1 à 2 m³ par heure) engendre une dispersion des fibres dans l'atmosphère avant que le béton n'atteigne la paroi à couvrir.

Un autre avantage de l'invention est de couvrir en une seule étape toute l'épaisseur nécessaire. Un seul passage peut donc être réalisé sur la paroi du bassin.

Un autre but de l'invention est de proposer une piscine présentant des caractéristiques mécaniques de résistance au moins aussi favorables que celles du béton armé. Pour ce faire, un mélange précis et une proportion particulière de fibres sont proposés.

Un autre objet de l'invention est de proposer des fibres de renfort de forme particulière.

D'autres buts avantages apparaîtront au cours de la description qui suit.

La présente invention concerne un procédé de fabrication de bassins aquatiques tels des bassins de piscines, consistant à couvrir les parois d'une cavité au moyen de béton, caractérisé par le fait que qu'il comprend les étapes suivantes :
- préparation d'un mélange de ciment, de sable et de fibres.
- transfert dudit mélange vers une buse de projection.
- projections simultanées dudit mélange et d'eau sur la paroi à couvrir, par la buse de projection.

Ce procédé pourra comprendre les étapes suivantes :
- on effectue la projection sur la paroi à un débit de plus de 6m³/h.
- on utilise un mélange comprenant entre 30 et 70 kg/m³ de fibres.
- les fibres sont en acier ou en matériau polymère.
- le mélange comprend entre 17 et 22% de ciment, en proportions pondérales.
- on utilise des fibres dont la longueur est de 3 à 5 cm et dont les extrémités sont pliées pour former deux ailes.
- préalablement à la projection, on positionne un coffrage de canisses sur la paroi à couvrir.

L'invention concerne en outre un bassin notamment pour piscine apte à être fabriqué en mettant en oeuvre le procédé selon l'invention et caractérisé par le fait que ses parois, au moins latérales, sont recouvertes d'un matériau composite constitué d'au moins une rangée de canisses noyée dans un béton à base de ciment, de sable et de fibres.

Les dessins ci-joints sont donnés à titre d'exemples indicatifs et non limitatifs. Ils représentent un mode de réalisation préféré selon l'invention. Ils permettront de comprendre aisément l'invention.

La figure 1 est une vue schématique d'étapes importantes du procédé de fabrication ici présenté.

La figure 2 montre un mode de réalisation particulier des fibres incorporées dans le mélange à béton.

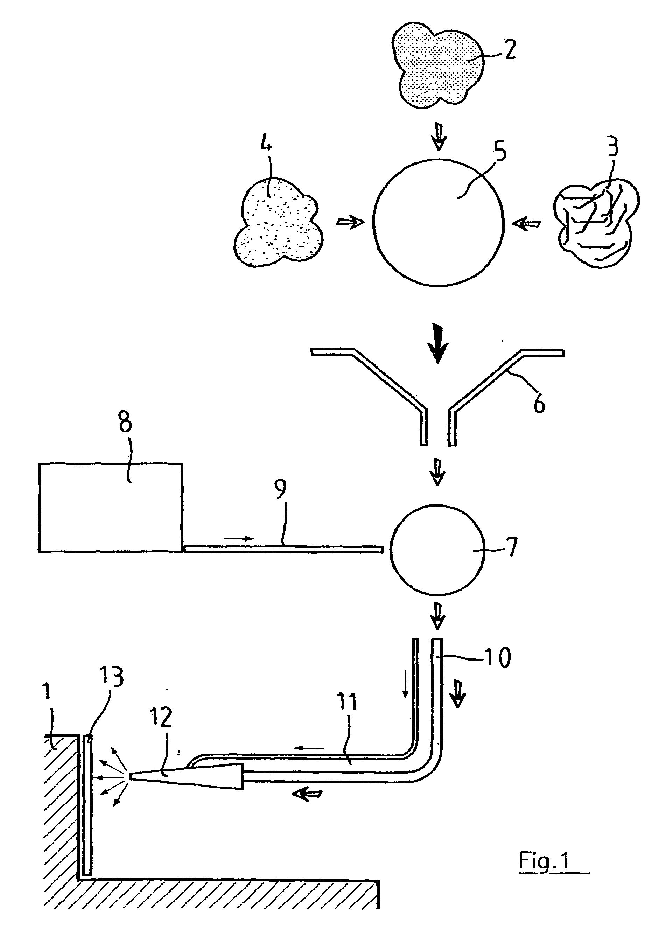

Comme schématisé en figure 1, la paroi 1 du bassin est à couvrir d'un mélange constituant le béton.

La réalisation de cette couverture de béton est effectuée au moyen d'une projection de béton.

Selon l'invention, on prépare d'abord le mélange constitutif du béton comprenant des fibres 3, du ciment 2 et du sable 4. Leur mélange est effectué au moyen d'un mélangeur 5 puis orienté vers une trémie repérée 6 à la figure 1.

Par le biais de la trémie, le mélange parvient jusqu'à un rotor 7.

A ce niveau, un compresseur 8 est utilisé pour augmenter la vitesse du mélange afin qu'il parvienne avec un débit élevé jusqu'à la buse de projection 12.

L'accélération du mélange est effectuer au moyen d'un compresseur 8 alimentant en air comprimé le rotor 7 par le biais d'un tuyau 9.

En sortie du rotor, la circulation du mélange vers la buse de projection 12 est effectuée par un tuyau de transfert 10.

En outre, un tuyau d'eau 11 est présent pour véhiculer de l'eau également sous pression (préférentiellement par le biais du même compresseur 8).

L'eau et le mélange se rencontrent au niveau de la buse de projection 12.

Ainsi, la fabrication s'effectue par voie sèche jusqu'à la buse 12.

A ce niveau, une projection à haut débit est opérée.

De façon préférentielle, le débit de projection sera au moins de 6 m³ par heure.

Par ce moyen, on obtient un taux définitif de fibres dans le béton projeté très élevé.

Peu de pertes dans l'atmosphère sont constatées même avec l'emploi de fibres en matière polymère et notamment en polypropylène.

A ce sujet, les fibres seront préférentiellement soit en acier, soit en un matériau polymère tel que le polypropylène.

Par ailleurs, une teneur en fibre de 30 à 70 kg/m³ dont le mélange pourra convenir pour obtenir une paroi de bonne résistance.

En outre, le mélange pourra comprendre entre 17% et 22% de ciment en proportion pondérale.

Afin d'obtenir une bonne cohésion du mélange et particulièrement une interaction favorable entre la matrice constituée par l'ensemble du ciment et du sable et les fibres de renfort, ces dernières auront avantageusement une longueur de 3 à 5 cm et présenteront des extrémités 14 pliées afin de former deux ailes.

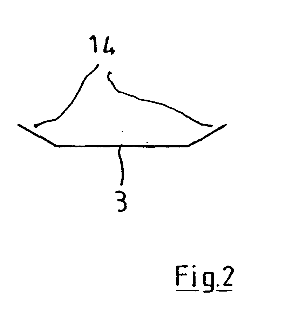

La figure 2 montre ce mode particulier de réalisation où deux extrémités 14 sont pliées.

Une couche composite est ainsi constituée sur la paroi 1 du bassin.

Cette couche peut également comprendre au moins une rangée de canisses 13 constituant une sorte de coffrage.

Le coffrage de canisses est positionné avant la projection.

La rangée de canisses ainsi incorporée facilite le maintien en position du béton projeté et assure la régularité de la projection.

Pour illustrer les performances du présent procédé de fabrication, on indique que pour une teneur de 50 kg/m³ de fibres d'acier dans le mélange, on obtient in situ, une teneur de quarante six kg/m³ de ces mêmes fibres. On constate donc que très peu de pertes sont occasionnées par la projection.

Par ailleurs, on a constaté que le déplacement des parois sous une charge (notamment sous la charge de la pression de l'eau à l'intérieur du bassin) était inférieur pour les bétons fibrés projetés selon la présente invention que pour un béton armé selon l'état de la technique.

De cette façon, les risques de déformation du bassin une fois chargé d'eau sont moins importants avec le procédé de fabrication de l'invention qu'avec les procédés classiques à béton armé.

L'invention concerne également un bassin apte à mettre en oeuvre le procédé de l'invention. Particulièrement, le bassin présenté voit ses parois recouvertes d'un matériau composite constitué d'au moins une rangée de canisses noyée par exemple par le biais de la mise en oeuvre du procédé de l'invention, dans un béton à base de ciment, de sable et de fibres.

### REFERENCES

- 1.: Paroi du basin
- 2.: Ciment
- 3.: Fibres
- 4.: sable
- 5.: Mélangeur
- 6.: Trémie
- 7.: Rotor
- 8.: Compresseur
- 9.: tuyau
- 10.: Tuyau de transfert
- 11.: Tuyau d'eau
- 12.: Buse
- 13.: Canisse
- 14.: Extrémité

## Revendications

1. Procédé de fabrication de bassins aquatiques tels des bassins de piscines, consistant à couvrir les parois d'une cavité au moyen de béton, **caractérisé par le fait qu'**il comprend les étapes suivantes :
- préparation d'un mélange de ciment, de sable et de fibres.
- transfert dudit mélange vers une buse de projection.
- projections simultanées dudit mélange et d'eau sur la paroi à couvrir, par la buse de projection de sorte que, préalablement à la projection, on positionne un coffrage de canisses sur la paroi à couvrir.

2. Procédé selon la revendication 1, **caractérisé par le fait**
**qu'**on effectue la projection sur la paroi à un débit de plus de 6m³/h.

3. Procédé selon la revendication 1 ou 2, **caractérisé par le fait**
**qu'**on utilise un mélange comprenant entre 30 et 70 kg/m³ de fibres.

4. Procédé selon l'une quelconque des revendications 1 à 3, **caractérisé par le fait**
**que** les fibres sont en acier ou en matériau polymère.

5. Procédé selon l'une quelconque des revendications 1 à 4, **caractérisé par le fait**
**que** le mélange comprend entre 17 et 22% de ciment, en proportions pondérales.

6. Procédé selon l'une quelconque des revendications 1 à 5, **caractérisé par le fait**
**qu'**on utilise des fibres dont la longueur est de 3 à 5 cm et dont les extrémités sont pliées pour former deux ailes.

7. Bassin, notamment pour piscines, apte à être fabriqué en mettant en oeuvre le procédé selon la revendication 1, **caractérisé par le fait**
**que** ses parois, au moins latérales, sont recouvertes d'un matériau composite constitué d'au moins une rangée de canisses noyée dans un béton à base de ciment, de sable et de fibres.

## Patentansprüche

1. Fertigungsverfahren für Wasserbecken, wie zum Beispiel Schwimmbäder, bei dem die Wände eines Innenraums mit Beton beschichtet werden, **gekennzeichnet dadurch, dass** es folgende Schritte umfasst:
■ Vorbereitung einer Mischung aus Zement, Sand und Fasern,
■ der Weiterleitung dieser Mischung zu einer Spritzdüse,
■ das gleichzeitige Verspritzen dieser Mischung und Wasser mit der Spritzdüse auf eine zu beschichtende Wand, wobei vor dem Verspritzen eine Verschalung aus Rohrmatten auf die zu beschichtende Wand aufgebracht wird.

2. Verfahren gemäß Anspruch 1, **gekennzeichnet dadurch, dass** das Verspritzen auf die Wand mit einem Durchsatz von mehr als 6 m³/h erfolgt.

3. Verfahren gemäß Anspruch 1 oder 2, **gekennzeichnet dadurch, dass** eine Mischung mit 30 bis 70 kg/m³ Faseranteil verwendet wird.

4. Verfahren gemäß einem der Ansprüche 1 bis 3, **gekennzeichnet dadurch, dass** die Fasern aus Stahl oder einem Polymerwerkstoff sind.

5. Verfahren gemäß einem der Ansprüche 1 bis 4, **gekennzeichnet dadurch, dass** die Mischung 17 bis 22 Gew.-% Zement enthält.

6. Verfahren gemäß einem der Ansprüche 1 bis 5, **gekennzeichnet dadurch, dass** Fasern mit einer Länge von 3 bis 5 cm verwendet werden, deren Enden so gefaltet sind, dass sie zwei Flügel bilden.

7. Becken, insbesondere für Schwimmbäder, geeignet zur Fertigung mittels des in einem der Ansprüche 1 bis 6 angegebenen Verfahrens, **gekennzeichnet dadurch, dass** die Wände, zumindest die Seitenwände, mit einem Verbundmaterial bedeckt sind, das aus mindestens einer Reihe Rohrmatten besteht, die in Beton auf Basis von Zement, Sand und Fasern eingebettet sind.

## Claims

1. Process for the production of swimming pools, consisting in covering the walls of a cavity with concrete, **characterised in that** it comprises the following steps:
- preparation of a mixture of cement, sand and fibres.
- transfer of said mixture to a spray nozzle.
- simultaneous projection of said mixture and water on the wall to be covered by the spray nozzle with positioning of wattle formwork on the wall to be covered before spraying.

2. Process according to claim 1, **characterised in that**
spraying on the wall is carried out at a flow rate greater than 6 m³/h.

3. Process according to claim 1 or 2, **characterised in that**
there is a mixture comprising between 30 and 70 kg/m³ of fibres.

4. Process according to any of claims 1 to 3, **characterised in that**
the fibres are steel or polymeric material.

5. Process according to any of claims 1 to 4, **characterised in that**
the mixture comprises between 17 and 22% by weight of cement.

6. Process according to any of claims 1 to 5, **characterised in that**
there are used fibres whose length is from 3 to 5 cm and whose ends are bent to form two wings.

7. Pool, in particular for swimming pools, adapted to be produced by use of the process according to one of claims 1 to 6 **characterised in that**
its walls, at least the side walls, are covered with a composite material constituted by at least one layer of wattle embedded in a concrete based on cement, sand and fibres.
